(19) Europäisches Patentamt
European Patent Office
Office européen des brevets

(11) Publication number: 0 186 705 B1

(12) EUROPEAN PATENT SPECIFICATION

(45) Date of publication of patent specification: 25.01.89

(51) Int. Cl.$^4$: **C 08 G 77/50**, C 08 G 77/20

(21) Application number: 85903533.9

(22) Date of filing: 21.06.85

(86) International application number: PCT/US85/01188

(87) International publication number: WO 86/00322 16.01.86 Gazette 86/02

# (54) TERMINAL CLUSTER ACRYLATE SILICONES.

(30) Priority: 22.06.84 US 623759
22.06.84 US 623760

(43) Date of publication of application: 09.07.86 Bulletin 86/28

(45) Publication of the grant of the patent: 25.01.89 Bulletin 89/04

(84) Designated Contracting States: AT BE CH DE FR GB LI NL SE

(56) References cited:
EP-A-0 018 624
EP-A-0 130 731
EP-A-0 134 678
DE-A-2 747 233
US-A-4 309 520

(73) Proprietor: LOCTITE CORPORATION
705 North Mountain Road
Newington, Connecticut 06111 (US)

(72) Inventor: LIN, Samuel, Q., S.
415 Central Boulevard
Fort Lee, NJ 07024 (US)
Inventor: NAKOS, Steven, T.
97 Boston Hill Road
Andover, CT 06232 (US)
Inventor: KLEMARCZYK, Philip
12 Deer Run Road
Collinvsville, CT 06022 (US)

(74) Representative: Marchant, James Ian et al
Elkington and Fife High Holborn House
52/54 High Holborn
London WC1V 6SH (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 186 705 B1

Courier Press, Leamington Spa, England.

**Description**

This invention relates to acrylic functional organosiloxane polymers.

Acrylic functional organosiloxane polymers (silicones) are well known. Such materials have found particular use as components of radiation-curable release coatings for which bulk cured properties have little importance.

In U.S. Patent 3,886,865 there are described compositions useful for producing ink repellent areas on a printing plate which are solutions of certain methacrylate functional silicones. The silicones are essentially solid materials which may be produced by condensation of a hydroxy or chloro terminated dimethylsilicone with a hydrolyzate of phenyltrichlorosilane and methacryl functional silanes having three hydrolyzable groups. The trifunctional ingredients will produce highly cross-linked polymers of undefined structure which are nonflowable at room temperature.

In U.S. Patent 4,387,240 there are described low molecular weight oligomers having a high methacrylate density which may be represented by the formula:

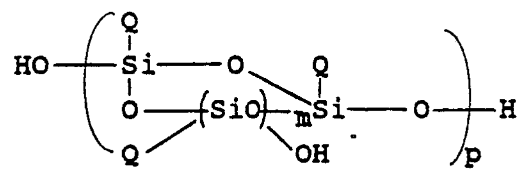

where m is 1, 2 or 3; p is 2—10 and Q is methacryloxypropyl or similar groups. These oligomers are used as binders in dental filling compositions to give hard abrasion resistant cured fillings.

In U.S. Patent 4,424,328 there are described branched low molecular weight siloxane compounds with 3 or 4 of the branches terminated with methacryloxypropyl groups. These compounds are used in the preparation of hard contact lenses.

In U.S. Patent 4,035,355, there are described anaerobically cured acrylic functional silicone resins. These are randomly copolymerized materials which must have a minimum functionality, as defined in that reference, of 2.2 to cure. These resins have very high cross-link density which will result in rigid cured products.

There exists a need for silicone resins which can be cured to tough rubbery products by chemical free radical generators, particularly anaerobic cure systems. There also exists a need for UV curable acrylic silicone polymers of higher molecular weight or which may be cured to rubbery products at faster speed.

It is an object of this invention to produce an acrylic functional silicone polymer, curable to an elastomer, which has a liquid flowable consistency and which can be readily cured even by chemical free radical generators at ambient temperatures. The inventive polymers extend the range of molecular weight of acrylated silicone polymers which may be cured to tough rubbers by IV irradiation.

The present invention provides acrylic silicone resins in which a plurality of acrylic groups are clustered at or near the chain ends of the silicone polymer. These silicone resins are referred to herein as "cluster" silicones.

More particularly the present invention provides a polyorganosiloxane polymer having a flowable viscosity at 25°C of below about 500 Pa.s. and having structure represented by one of the formulas:

$$(AB)_mC \text{ or } [(AB)_m]_nSiR_{(4-n)}$$

where A is a linear, branched or cyclic organosiloxane segment containing from 3 to 50 siloxane repeat units, each segment A including at least three siloxane units having acrylic groups thereon; B is an organosiloxane siloxane segment represented by the formula

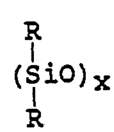

C is A or a triorganosilyl group; the R groups are the same or different organo groups other than acrylic groups or groups co-curable therewith; m is an integer of 1 or more; n is 3 or 4; and x is an integer of at least 100; each A segment also including a linking unit which binds the A segment to the B segment through either a Si-O-Si linkage or a Si-$R^3$-Si linkage where $R^3$ is alkylene or alkenylene.

The concept forming the basis of this invention is that a combination of fast curing and elastomeric cured properties can be obtained in the liquid silicone if the silicone is structured so as to have long unreactive siloxane segments which are terminated by clusters of closely spaced reactive acrylic sites. The cluster regions are more readily cross-linked by UV irradiation or chemical free radical generators than

corresponding monoacrylate terminated silicones, while the long unreactive silicone segments provide elastomeric cured properties.

By acrylic containing group is meant a group which includes a radical represented by the formula $CH_2=C(R^1)—C(=O)—$, where $R^1$ is H, or lower alkyl. This acrylic structure is hereinafter also represented by the abbreviation Acr. Typically the acrylic containing group will be bound to a silicon atom of the siloxane polymer through a C-Si linkage. Such groups may be represented as

$$Acr—X—R^2— \qquad [III]$$

wherein X is O, NH or S and $R^2$ is alkenylene or alkylene such as propylene or propenylene. Less preferably, the acrylic group may be linked to silicone through a C—O—Si linkage. Such groups may be represented by the formulas:

$$Acr—O— \qquad [IV] \text{ and}$$

$$Acr—O—R^2—O— \qquad [V]$$

These groups, although hydrolytically unstable, may be usefully employed in limited amounts in the inventive polymers.

As still another alternative the acrylic containing group may be represented by the structure:

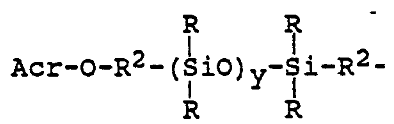

[VI]

where y is 0 to 4. As taught in EP—A—0134678, such groups may be produced by hydrosilation of a vinyl or other alkenyl or alkynyl functional silicone with grafting agent. The alkenyl or alkynyl functional cluster silicone may be represented by the formula

$$(DB)_mC^1 \text{ or } [(DB)_m]_nSiR_{(4-n)}$$

where $C^1$ is D or triorganosilyl and D is a polyorganosiloxane segment which includes at least 3 siloxane repeat units having pendant alkenyl or alkynyl groups. The grafting agent may be represented by the formula:

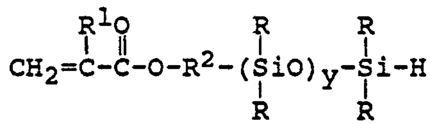

[VII]

The product of the reaction may be described as a cluster silicone having acrylic containing siloxane units with the structure

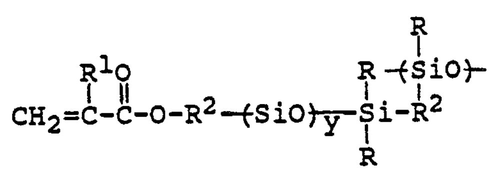

where R is as defined above, $R^1$ is lower alkyl, $R^2$ and y are as defined above. For example R may be methyl, $R^2$ may be propyl and y may be 0 or 1.

In another embodiment the acrylic containing siloxane units have the structure

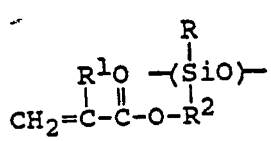

where R is as defined above, $R^1$ is H or lower alkyl and $R^2$ is as defined above.

In general the A segments may be defined as including at least 3 acrylic containing siloxane units of the structure

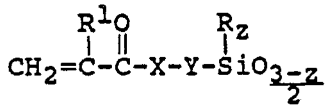

[VIII]

where R, $R^1$ and X are as previously defined, Y is a divalent linkage group and z is 0, 1 or 2.

The A segment may be cyclic linear or branched. When cyclic, the A segment will include at least 3 siloxane units as in the formula VIII and at least one linking unit as discussed below. When linear or branched, the A segment will preferably include, in addition to a linkage unit and at least 3 units of formula VIII, a plurality of units of the formula

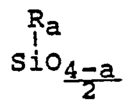

[IX]

where a is 0—3. Preferably the units of formula (IX) will comprise about 40—70% of the linear or branched A segment repeat units and the units of formula (VIII) will comprise about 30—60% of the A segment repeat units, and the respective units will be alternatively or randomly distributed. It is also preferred that the total number of repeat units on the A segment be less than 30, still more preferably about 20 or less in order to provide a more concentrated cross-linking region.

As mentioned, the A segments will include linking units which bind to the B segments. The linkage may be through either Si—O—Si bonds or Si—$R^3$—Si bonds where $R^3$ is alkylene (for example ethylene or propylene) or alkenylene. Examples of such linkages include formulas X—XII below where the open valencies connect to other A segment repeat units and b is as defined for formulas I and II.

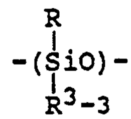

[X]

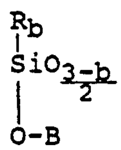

[XI]

where b is 1 or 2.

A polymer in which the A segment is bound to the B segment through an Si—O—Si linkage may be prepared by condensation of an A segment prepolymer having at least 3 acrylic containing siloxane repeat units and at least one unit of the formula

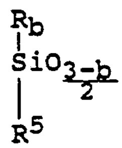

where $R^5$ is a condensable group and b is 1 or 2 with a silanol terminated silicon of the formula

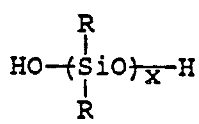

for example the group $R^5$ may be

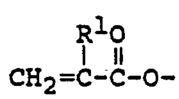

Alternatively an A segment prepolymer having at least 3 said acrylic containing siloxane repeat units and at least one unit of the formula

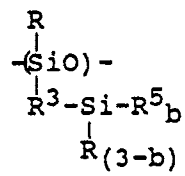

where $R^5$ is a condensable group and b is 1 or 2, may be condensed with a silanol terminated silicone of the formula

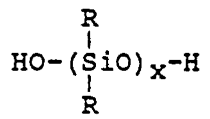

and a monofunctional chain stopper. For example the chain stopper may be a compound of the formula

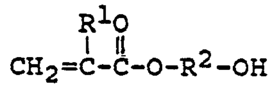

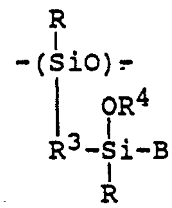

[XII]

where $R^4$ is alkyl, substituted alkyl, or Acr—O—$R^2$.

The B segments in formulas I and II, above, are most conveniently comprised of dimethylsiloxy units. However, it may be desirable in some instances to substitute other groups for one or both of the said methyl groups in the B segment. For instance, silicones containing phenyl groups are well known for increased compatibility with organic compounds or with other silicones having significant amounts of organic functional groups. Thus, it may be desirable in some instances for the B segment to be comprised of some or all diphenyl siloxy or methyl siloxy repeat units so as to decrease phase separation of the A and B blocks in the cured polymer or to increase the solubility of curing or stabilizing agents in a composition of the inventive cluster silicones.

Other R groups which may be substituted for methyl on the B segment siloxy units are other alkyl groups or substituted alkyl or aryl groups such as trifluoropropyl. The B segment groups, however, should not be co-reactive under free radical cure conditions with the acrylic groups of the A segment since the B segment must remain uncrosslinked when the resin is cured in order to obtain the desired elastomeric properties. Examples of groups co-curable with acrylic groups are other ethylenically unsaturated groups such as vinyl or allyl and crosslinking groups such as alkyl thiol.

While the B segments may have a minimum of about 100 repeat units and still cure to useful elastomeric products, at least when the A segments are about 25 linear units or less, it is preferred that they have at least about 160 repeat units, still more preferably at least about 300 repeat units, in order to give optimal cure elastomers.

The inventive cluster acrylated silicones may be synthesized by the number of routes including coupling of a multi-acrylate cluster to an acrylate free silicone terminated with a suitable functional group which can add to or condensed with a corresponding reactive group on the multi-acrylate cluster. Where the multi-acrylate cluster has exactly one such coupling functional group it can be added essentially quantitatively to a difunctional acrylate free silicone to produce a resin as in formula I where C is an A segment. However, it is generally more practical to synthesize a multi-acrylate cluster with such coupling functionalities present at an average of greater than one, typically about 1.5, group per cluster in order to assure at least 1 such coupling group on each cluster. When clusters with plural coupling functionality are used, viscosity increasing chain extension can occur. Such a chain extension can be controlled, however, by converting a portion of the reactive ends of the acrylate free silicone polymer to nonreactive ends (i.e., nonreactive to the coupling reaction). Thus a silanol terminated dimethyl silicone may be reacted with up to 1 mole of trimethylmethoxysilane or methacryloxypropyldimethylchlorosilane before coupling to a multi-acrylate cluster with one or more condensable groups. In such case the coupling resin is represented by formula I where C is triorganosilyl.

In accordance with the invention, a variety of novel silicones have been separately developed of which the following species are exemplary.

(a) Methacrylate Cluster Silicones From Silicones With Terminal Vinyl Clusters

In EP—A—0134678 there are described hydrosilation reagents such as those of formula VII above containing methacrylate functionality which can be added to vinyl silicones so as to create novel acrylic

functional silicones. Examples of these reagents are 3-(methacryloxypropyleneoxy)-1,1,3,3 tetramethyldisiloxane, methacryloxypropyl-dimethylsilane and 3-(methacryloxypropenyl)-1,1,3,3-tetramethyldisiloxane. These same reagents can be utilized to convert silicones having terminal vinyl clusters to terminal cluster acrylated silicones of this invention.

Cluster vinyl silicones may be prepared by several methods. The simplest such clusters are trivinylsiloxy terminated dimethyl silicones such as described in U.S. Patent 4,364,809. Because of the bulkiness of the hydrosilation reagents utilized to create the inventive acrylate clusters from vinyl cluster silicones. However, it is more preferable that the cluster vinyl silicones have the multivinyl functionality spread among several siloxy units, rather than on a single molecule. Such silicones can be prepared by sequential anionic polymerization of a mixture of cyclic dimethylsiloxanes and vinyl containing cyclic siloxanes followed by extension of additional cyclic dimethylsiloxanes to form the B segments, as exemplified in Example 1 below. An alternative synthesis of cluster vinyl terminated silicones is to prepare a alkenyl or alkynyl containing segment by base catalyzed equilibrium polymerization of alkenyl or alkynyl silanes or low molecular weight organosiloxanes followed by coupling with a silicone terminated with condensable groups. Example 2 illustrates the preparation of a cluster vinyl silicone by this alternative method. Example 3 illustrates the preparation of a cluster acrylated silicone of the present invention from a vinyl cluster silicone.

The cluster vinyl products produced by the exemplified methods may be represented by the formula

$$(DB)_mC^1 \text{ or } [(DB)_m]_nSiR_{(4-n)}$$

wherein B, R, m and n are as previously defined, $C^1$ is D or a triorganosilyl group; and D is a linear organosiloxane segment containing between about 3 and about 50 repeat units at least 3 of which contain pendant vinyl, allyl or other alkenyl or alkynyl groups.

Example 1

A dry 1000 ml three neck flask, equipped with a mechanical stirrer, condenser, thermometer, addition funnel and nitrogen blanket was charged with hexamethylcyclotrisiloxane (22.2 g, 0.1 mole), 1,3,5-trimethyl-1,3,5-trivinylcyclotrisiloxane (5.2 g of 0.02 mole) and dry THF (250 ml). A 1.25 M solution of n-butyllithium (4.8 ml, 6 mmole) was added at room temperature, and after stirring for five minutes, the reaction temperature was raised to 45—50°C. The reaction mixture was stirred at 45—50°C for 90 minutes and additional hexamethylcyclotrisiloxane (111.0 g, 0.5 mole) in 250 ml of THF was added dropwise. Stirring and heating was continued for 90 minutes. Silicon tetrachloride (0.29 g, 1.7 mmole) was added and the temperature was raised to reflux (ca.65°C) for 18 hours. THF was removed under reduced pressure and the residue taken up in 500 ml of toluene. The toluene mixture was washed once with 250 ml of 5% aqueous sodium bicarbonate solution and then washed with water to neutrality. The organic layer was separated, dried ($MgSO_4$) and filtered. Solvent was removed under reduced pressure, and the product vacuum dried for 3 hours at 75°C and 27 Pa (0.2mm/Hg). Yield-110 g (80%). Theoretical MW=100,000: found GPC MW(wt. average) = 63,000 (polystyrene standard).

Example 2

A dry three liter resin kettle, equipped with a mechanical stirrer, condenser, thermocouple temperature controller and nitrogen blanket, was charged with octamethylcyclotetrasiloxane (37.0 g, 125 mmole, 1,3,5,7-tetramethyl-1,2,5,7-tetravinylcyclotetrasiloxane (22.2 g, 62.5 mmole), and α, ω-bis-(N,N-dimethylamino)-octamethyltetrasiloxane (25 g, 62.5 mmole). This reaction mixture was heated to 80—89°C with stirring and tetramethylaminosilanoate (2.0 g) was added. Viscosity increased with time. After stirring overnight at 80—85°C, the reaction mass was heated to 150—155°C for three hours to destroy the catalyst. Volatile components were removed by heating the crude product to 90°C for two hours at 67Pa (0.5 mm/Hg). Yield-73.4 g (89%). found GPC MW(no.ave.)=2900.

A dry 250 ml three neck flask, equipped with a mechanical stirrer, condenser, thermometer and nitrogen blanket, was charged with Rhone-Poulenc 48V3500, a 28,000mw polydimethylsiloxane terminated with silanol groups, (80 g), the polymer of the previous paragraph (6.5 g), and toluene (100 ml). The solution was heated to reflux for 18 hours. The reaction was quenched with 1 ml of n-butanol and stirred for 30 minutes at reflux. Solvent was removed under reduced pressure and the product vacuum dried for three hours at 50°C and 27 Pa (0.2 mm/Hg) to give 61.3 g of a cluster vinyl terminated liquid silicone polymer. No. Ave. MW found (GPC polystyrene std.) = 79,000.

Example 3

A dry 250 ml three neck flask, equipped with a magnetic stirrer, condenser, thermometer and nitrogen blanket, was charged with the polymer of Example 1 (30 g, 0.3 mmol), methacryloxypropyleneoxydimethylsilane (2.6 g, 13 mmol), toluene (100 ml) and BHT (0.04 g) as stabilizer. A sample of this solution was taken for IR analysis. Catalyst (2% $H_2PtC_6.6H_2O/CH_3COOC_4H_7$) was added and the reaction mixture was heated to 70—75°C. The reaction was complete after 90 minutes as shown by the dissappearance of the Si-H absorption in the IR spectrum of the solution. The solution was filtered and solvent removed under reduced pressure. The product was vacuum dried for three hours at 50°C and 107 Pa (0.8 mm/Hg).

Yield = 31.3 g (96%). Theoretical MW = 64,000: found GPC MW(wt. average) = 81,967.

(b) Acrylate Cluster Silicones From Vinyl Terminated Silicones.

The hydrosilation addition reaction can also be used to prepare acrylate clusters from readily available monoalkenyl terminated silicones. Such silicones are typically terminated with vinyldimethylsilyl or vinyldiphenylsilyl groups. Silicones terminated with other groups such as allyl groups may also be used. This procedure uses a short siloxane segment with multiple SiH functionality, some of which are used to bind acrylic groups to the short segment and some of which are used to bind the short segment to the vinyl terminated silicone polymer. Thus, vinyl terminated silicones may be hydrosilated using a large excess of a short chain silicone having three or more SiH functional groups per molecule. Cyclic silicones such as $D_4^{4H}$ and $D_5^{5H}$ are especially useful as short segment silicones for this method. The SiH functional silicone is used in substantial excess so as to allow only minimal chain extension, resulting in silicones containing terminal regions having plural SiH functionality. This functionality is then used to hydrosilate an alkenyl or alkynyl acrylate monomer, such as allyl methacrylate, allyloexyethyl methacrylate, propargyl acrylate or propargyl methacrylate to produce the inventive cluster acrylate silicones. Examples 4 illustrates a synthetsis in accordance with this method.

Example 4

Mobay U—1, a vinyl-terminated silicone of approximately 26,000 MW (25.0 g, 1.89 X$10^{-3}$ eq vinyl) was added to 0.68 g (1.35X$10^{-2}$ eq. SiH) tetramethylcyclotetrasiloxane and 0.34 g 2% chloroplatinic acid hexahydrate in butyl acetate to 25 ml toluene. The mixture was heated to 100°C for 3 hours with stirring under nitrogen. The reaction was cooled to 70° and 1.25 g (0.11 mole) propargyl acrylate with 0.01 g butylated hydroxytoluene (BHT) were added. Heating was continued at 70°C for 3 hours when IR showed no SiH left in the reaction. The reaction was then deep-stripped under high vacuum to give 26—8 g of a viscous, translucent liquid. This material, with 2% of the photoinitiator diethoxyacetophenone (DEAP), was cured by 70 $mL^W/cm^2$ UV to a stretchy elastomer, 5 seconds per side onto a 4.8 mm (3/16") sample.

Alternatively, the hydrosilation steps may be reversed, first reacting the short chain SiH silicone with the acrylic monomer and then adding the vinyl terminated silicone. This procedure, however, is limited to methacrylate or other alpha-alkyl acrylate monomer hydrosilations since the SiH functionality reserved for addition to the vinyl silicone will attack acrylate under these extended two-step hydrosilation conditions.

(c) Acrylate Cluster Silicones From Silanols and Condensable Acrylic Clusters

This method involves preparation of a short chain plural acrylated silicone segment which has condensable functionality followed by condensation of the resulting acrylate cluster with a longer silanol terminated silicone. Example 5 illustrates one method by which the acrylic and condensable functionalities are separately selected and added to a short chain SiH functional silicone, followed by condensation with a partially end blocked silanol.

Example 5

Pentamethylcyclopentasiloxane (25.0 g, 0.083 mole) was placed in a 250 ml 3 neck flask containing 17.57 g (0.124 mole) vinylmethyldichlorosilane, 42.2 g toluene, and 0.1 g of a divinyltetramethyldisiloxane/platinum catalyst in xylene, giving 50 ppm platinum in the reaction. The reaction was heated to 80°C under nitrogen with stirring, resulting in an exotherm to 86°C, lasting 20 minutes. After 10 more minutes 35.18 g (0.320 mole) propargyl acrylate with 0.05 g BHT was added and the reaction temperature raised to 90°C for 3 hours. IR showed complete disappearance of SiH at this time. This reaction mixture comprises a 62.1% solution of an acrylated cyclic containing 1.5 methyldichlorosilyl groups per ring.

Rhone Poulenc silanol-terminated silicone 48V3500 (25.0 g, 1.765X$10^{-3}$ eq Silanol) was added to a solution of 0.18 g (0.862X$10^{-3}$ mole) acryloxypropenyldimethylchlorosilane and 0.4 g (0.005 mole) pyridine in 25 ml hexane and stirred 30 minutes at 60° under nitrogen. Pyridine hydrochloride gradually separated. The following reagents were added successively, allowing 30 minutes at 60° for reaction between each addition: the reaction product mixture from the previous paragraph, (1.27 g solution, 2.64X$10^{-3}$ eq SiCl); 0.23 g (1.76X$10^{-3}$ mole) 2-hydroxypropyl acrylate; 2.0 g (0.027 mole) 1-butanol. After the last addition and reaction increment, the mixture was filtered through Celite™ and stripped under high vacuum to give 24.0 g of a hazy flowable liquid that readily cured by 70mw/$cm^2$ UV (2% DEAP) to a stretchy elastomer in only 5 seconds irradiation per side onto a 4.8 mm (3/16") thick sample.

Hydrosilations involving allyl methacrylate suffer from the limitation that substantially amounts of the hydrosilation product result in silyl methacrylate groups due to propene elimination. Typically about 30% of the hydrosilation product undergoes propene elimination. These silyl methacrylate groups are usually undesirable because of their reactivity to moisture, similar to the well known acetoxy silicones. Example 6, however, illustrates that this previously undesired characteristic can be exploited to prepare cluster acrylated silicones utilizing the silyl methacrylate groups obtained from an allyl methacrylate hydrosilation as the leaving groups in a subsequent silanol condensation.

Example 6

A mixture of 37.6 g of an SiH containing dimethyl silicone (M.W. 2654, 2.5.$10^{-3}$ eq/g SiH), 12.2 g allyl

methacrylate, 0.25 g BHT, 0.126 g of $H_2PtCl_6/C_8H_{17}OH$ in toluene (0.76% Pt by weight) was placed in a 500 ml flask which was equipped with a condensor with a $N_2$ inlet, a mechanical stirrer, and a thermometer. The temperature was raised to 70°C gradually, and an exotherm was observed. The mixture was heated at 75°C ± 5°C for two hours and IR of SiH adsorption showed the reaction was about 50% complete. Two grams more of allyl methacrylate was added and the reaction continued for another hour. IR showed 60% completion.

Then 200 g of a 28,000 MW silanol terminated silicone in 100 ml toluene was added to couple the prepolymer of the previous reaction. The coupling was continued at 75°C ± 5°C for 3 hours. After stripping toluene at 70°C, it gave a colorless flowable liquid. An aliquot with 1.5%, by weight DEAP was prepared and exposed to 70,000 mW/cm² UV for 30 seconds to give a jelly-like material.

(d) Cluster Acrylated Silicones From Condensation of Silanol Silicone and Acrylated Hydrolyzable Silanes.

This procedure involves condensation of a mixture of multifunctional (D, T or Q) silanes on the ends of a silanol terminated silicone, followed by capping with a monofunctional (M) silane. Acrylated M, D or T silanes are included in the mixture to provide the desired multiple acrylate terminal clusters.

Example 7

Rhone-Poulenc 48V3500 (100.0 g, $7.06X10^{-3}$ eq silanol) was mixed with 2.10 g (0.014 mole) methyltrichlorosilane, 14.57 g (0.133 mole) dimethyldichlorosilane and 3.15 g (0.014 mole) acryloxypropenylmethyldichlorosilane, all in 200 ml hexane. Pyridine (0.8 g, 001 mole) was added to the nitrogen blanketed, mechanically stirred solution, and the reaction continued for one hour at 70°C. Next, 4.55 g (0.022 mole) acryloxypropenyldimethylchlorosilane was added followed by the portion-wise addition of 26.72 g (0.318 mole) sodium bicarbonate, allowing for effervescence. After one hour at 60°C after the last portion of bicarbonate, the reaction was filtered through Celite™ and stripped under high vacuum to give 76.0 g of a clear, flowable liquid that clouded on cooling. It was cured by 70mW/cm² UV as per the previous examples to a soft elastomer, requiring 20 seconds of radiation per side.

**Claims**

1. A polyorganosiloxane polymer having a flowable viscosity at 25°C of below about 500 Pa.s. and having structure represented by one of the formulas:

$$(AB)_mC \text{ or } [(AB)_m]_nSiR_{(4-n)}$$

where A is a linear, branched or cyclic organosiloxane segment containing from 3 to 50 siloxane repeat units, each segment A including at least three siloxane units having acrylic groups thereon; B is an organosiloxane siloxane segment represented by the formula

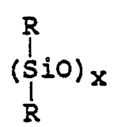

C is A or a triorganosilyl group; the R groups are the same or different organo groups other than acrylic groups or groups co-curable therewith; m is an integer of 1 or more; n is 3 or 4; and x is an integer of at least 100; each A segment also including a linking unit which binds the A segment to the B segment through either a Si-O-Si linkage or a Si-$R^3$-Si linkage where $R^3$ is alkylene or alkenylene.

2. A polymer as claimed in claim 1 wherein the A segment includes at least 3 acrylic containing siloxane units of the structure

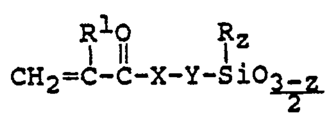

where $R^1$ is H or lower alkyl; X is O, NH or S; Y is a divalent linking group; and z is 0, 1 or 2.

3. A polymer as claimed in claim 1 or 2 wherein the A segment comprises from 3 to 30 siloxane repeat units.

4. A polymer as claimed in claim 3 wherein the A segment comprises from 3 to 20 siloxane repeat units.

5. A polymer as claimed in any of claims 1 to 4 wherein the A segment is linear or branched and 40—70% of the A segment siloxane units are represented by the formula

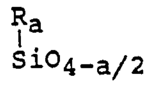

where a is 0—3 and 30—60% of the A segment siloxane units are represented by the formula

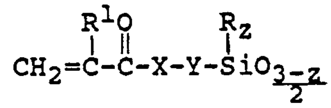

where $R^1$ is H or lower alkyl; X is 0, NH or S; Y is a divalent linking group; and z is 0, 1 or 2.

6. A polymer as claimed in any of claims 1 to 5 wherein x is at least 160.

7. A polymer as claimed in any of claims 1 to 5 wherein x is at least 300.

8. A polymer as claimed in any of claims 1 to 7 wherein the R groups are substituted or unsubstituted aryl or alkyl groups.

9. A polymer as claimed in claim 8 wherein the R groups are selected from phenyl, methyl and trifluoropropyl groups.

10. A polymer as claimed in any of claims 1 to 9 wherein m is 1—4.

11. A polymer as claimed in any of claims 1 to 10 wherein the acrylic containing siloxane units have the structure:

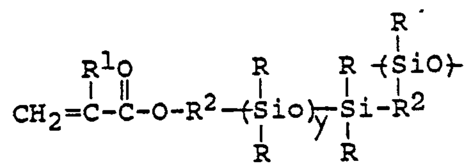

$R^1$ is lower alkyl, the $R^2$ groups are the same or different alkylene or alkenylene groups, and y is 0—4.

12. The polyorgano siloxane polymer of Claims 11 prepared by a method comprising hydrosilating a cluster vinyl silicone of the formula

$$(DB)_mC^1 \text{ or } [(DB)_m]_nSiR_{(4-n)}$$

where $C^1$ is D or triorganosilyl, D is a polyorganosiloxane segment which includes at least three siloxane repeat units having pendant alkenyl or alkynyl groups, B is an organosiloxane polymer segment represented by the formula $-(SiR_2O)_x-$, wherein x is an integer of at least 100, the R groups are the same or different organo groups other than acrylic groups or groups co-curable therewith, m is an integer of one or more and n is three or four, with a compound of the formula

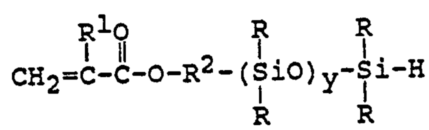

wherein R is as defined above and $R^1$, $R^2$ and y are as defined in Claim 11.

13. A polymer as claimed in claim 12 wherein y is 0 or 1; R is methyl and $R^2$ is propyl.

14. A polymer as claimed in claim 12 or 13 wherein the D segment contains at least three repeat units having pendant vinyl or allyl groups.

15. A polymer as claimed in any of claims 1 to 10 wherein the acrylic containing siloxane units have the structure

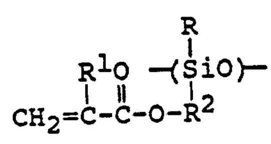

where $R^1$ is H or lower alkyl and $R_2$ is alkylene or alkenylene.

16. A polymer as claimed in claim 15 wherein A comprises at least 4 siloxane repeat units at least three of which are acrylic containing repeat units and at least one of which is represented by the formula

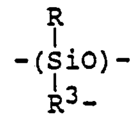

where $R^3$ is alkylene or alkenylene and is bound to a silicone atom of the B segment.

17. A polymer as claimed in claim 16 wherein $R^3$ is ethylene or propylene.

18. A polymer as claimed in any of claims 15 to 17 wherein the A segment is a cylclic organosiloxane segment.

19. A polymer as claimed in claim 15 wherein the A segment is bound to the B segment through an Si-O-Si linkage.

20. A polymer as claimed in claim 19 wherein the polymer is prepared by condensation of an A segment prepolymer having at least 3 acrylic containing siloxane repeat units and at least one unit of the formula

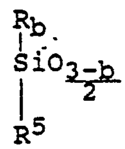

where $R^5$ is a condensable group and b is 1 or 2 with a silanol terminated silicone of the formula

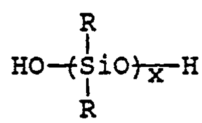

21. A polymer as claimed in claim 20 wherein $R^5$ is

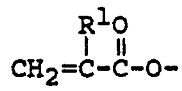

22. A polymer as claimed in claim 19 prepared by condensation of an A segment prepolymer having at least 3 acrylic containing siloxane repeat units and at least one unit of the formula

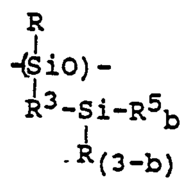

where $R^5$ is a condensable group and b is 1 or 2, with a silanol terminated silicone of the formula

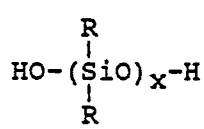

and a monofunctional chain stopper.

23. A polymer as claimed in claim 22 wherein the chain stopper is a compound of the formula

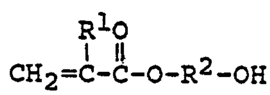

24. A crosslinked polyorganosiloxane polymer comprising the product of free radically curing a polymer as claimed in any of claims 1 to 23.

## Patentansprüche

1. Polyorganosiloxanpolymer mit einer Fließviskosität bei 25°C von weniger als etwa 500 Pa.s und der Struktur, wiedergegeben durch eine der Formeln:

$$(AB)_mC \text{ oder } [(AB)_m]_nSiR_{(4-n)}$$

worin A win lineares, verzweigtes oder cyclisches Organosiloxansegment ist, das 3 bis 50 Siloxan-Wiederholungseinheiten enthält, wobei jedes Segment A wenigstens drei Siloxaneinheiten mit Acrylgruppen daran einschließt; B ein Organosiloxan-Siloxansegment ist, wiedergegeben durch die Formel:

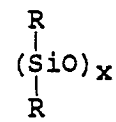

C A oder eine Triorganosilylgruppe ist; wobei die Gruppen R gleiche oder verschiedene organische Gruppen sind, die von Acrylgruppen oder damit co-härtbaren Gruppen verschieden sind; m eine Zahl von 1 oder mehr ist; n 3 oder 4 ist; und x eine Zahl von wenigstens 100 ist; wobei jedes Segment A auch eine Verbindungseinheit einschließt, die das Segment A an das Segment B entweder durch eine Si-O-Si-Bindung oder eine Si-$R^3$-Si-Bindung bindet, worin $R^3$ Alkylen oder Alkenylen ist.

2. Polymer, wie in Anspruch 1 beansprucht, worin das Segment A wenigstens drei acrylhaltige Siloxaneinheiten der Struktur einschließt:

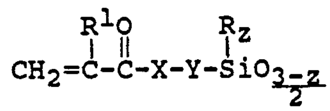

worin $R^1$ H oder Niederalkyl ist; X O, NH oder S ist; Y eine zweiwertige verbindende Gruppe ist; und z 0, 1 oder 2 ist.

3. Polymer, wie in Anspruch 1 oder 2 beansprucht, worin das Segment A 3 bis 30 Siloxan-Wiederholungseinheiten umfaßt.

4. Polymer, wie in Anspruch 3 beansprucht, worin das Segment A 3 bis 20 Siloxan-Wiederholungseinheiten umfaßt.

5. Polymer, wie in einem der Ansprüche 1 bis 4 beansprucht, worin das Segment A linear oder verzweigt ist und 40 bis 70% der Siloxaneinheiten des Segments A durch die Formel wiedergegeben werden:

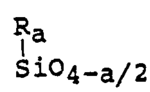

worin a 0 bis 3 ist, und 30 bis 60% der Siloxaneinheiten des Segments A durch die Formel wiedergegeben werden:

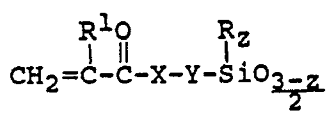

worin $R^1$ H oder Niederalkyl ist; X O, NH oder S ist; Y eine zweiwertige verbindende Gruppe ist; und z 0, 1 oder 2 ist.

6. Polymer, wie in einem der Ansprüche 1 bis 5 beansprucht, worin x wenigstens 160 ist.

7. Polymer, wie in einem der Ansprüche 1 bis 5 beansprucht, worin x wenigstens 300 ist.

8. Polymer, wie in einem der Ansprüche 1 bis 7 beansprucht, worin die Gruppen R substituierte oder unsubstituierte Aryl- oder Alkylgruppen sind.

9. Polymer, wie in Anspruch 8 beansprucht, worin die Gruppen R aus Phenyl, Methyl und Trifluorpropylgruppen ausgewählt sind.

10. Polymer, wie in einem der Ansprüche 1 bis 9 beansprucht, worin m 1 bis 4 ist.

11. Polymer, wie in einem der Ansprüche 1 bis 10 beansprucht, worin die acrylhaltigen Siloxaneinheiten die Struktur haben:

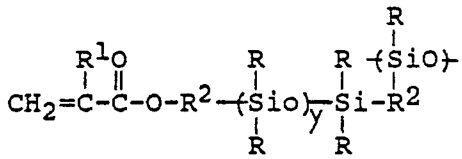

wobei $R^1$ Niederalkyl ist, die Gruppen $R^2$ gleiche oder verschiedene Alkylen- oder Alkenylengruppen sind und y 0 bis 4 ist.

12. Polyorganosiloxanpolymer nach Anspruch 11, hergestellt nach einem Verfahren, welches die Hydrosilierung eines Cluster-Vinylsilikons der Formel:

$$(DB)_mC^1 \text{ oder } [(DB)_m]_nSiR_{(4-n)}$$

worin $C^1$ D oder Triorganisilyl ist, D ein Polyorganosiloxansegment ist, das wenigstens drei Siloxan-Wiederholungseinheitem mit anhängenden Alkenyl- oder Alkinyl gruppen einschließt, B ein durch die Formel $-(SiR_2O)_x-$ wiedergegebenes Organosiloxan-Polymersegment ist, worin x eine Zahl von wenigstens 100 ist, die Gruppen R gleiche oder verschiedene organische Gruppen sind, die von Acrylgruppen oder damit co-härtbaren Gruppen verschieden sind, m eine Zahl von 1 oder mehr ist und n 3 oder 4 ist, mit einer Verbindung der Formel

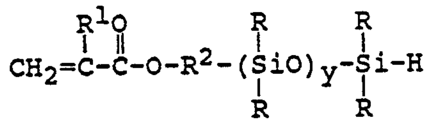

worin R wie oben definiert ist und $R^1$, $R^2$ und y wie in Anspruch 11 definiert sind, umfaßt.

13. Polymer, wie in Anspruch 12 beansprucht, worin y 0 oder 1 ist; R Methyl ist und $R^2$ Propyl ist.

14. Polymer, wie in Anspruch 12 oder 13 beansprucht, worin das Segment D wenigstens drei Wiederholungseinheiten mit anhängenden Vinyl- oder Allylgruppen aufweist.

15. Polymer, wie in einem der Ansprüche 1 bis 10 beansprucht, worin die acrylhaltigen Siloxaneinheiten die Struktur haben:

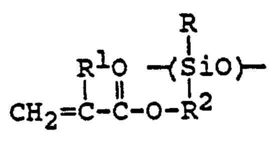

worin $R^1$ H oder Niederalkyl ist und $R_2$ Alkylen oder Alkenylen ist.

16. Polymer, wie in Anspruch 15 beansprucht, worin A wenigstens vier Siloxan-Widerholungseinheiten umfaßt, von denen wenigstens drei acrylhaltige Wiederholungseinheiten sind, und von denen wenigstens eine durch die Formel wiedergegeben wird

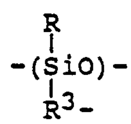

worin $R^3$ Alkylen oder Alkenylen ist und an ein Silicium-atom des Segments B gebunden ist.

17. Polymer, wie in Anspruch 16 beansprucht, worin $R^3$ Ethylen oder Propylen ist.

18. Polymer, wie in einem der Ansprüche 15 bis 17 beansprucht, worin das Segment A ein cyclisches Organosiloxansegment ist.

19. Polymer, wie in Anspruch 15 beansprucht, worin das Segment A durch eine Si-O-Si-Bindung an das Segment B gebunden ist.

20. Polymer, wie in Anspruch 19 beansprucht, worin das Polymer durch Kondensation eines Segment A-Prepolymeren mit wenigstens drei acrylhaltigen Siloxan-Wiederholungseinheiten und wenigstens einer Einheit der Formel

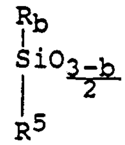

worin $R^5$ eine kondensierbare Gruppe und b 1 oder 2 ist, mit einem Silanol-terminierten Silikon der Formel:

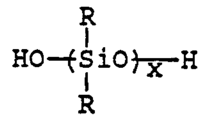

hergestellt wird.

21. Polymer, wie in Anspruch 20 beansprucht, worin $R^5$

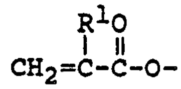

ist.

22. Polymer, wie in Anspruch 19 beansprucht, hergestellt durch kondensation eines Segment A-Prepolymeren mit wenigstens drei acrylhaltigen Siloxan-Widerholungseinheiten und wenigstens einer Einheit der Formel

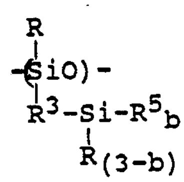

worin $R^5$ eine kondensierbare Gruppe und b 1 oder 2 ist, mit einem Silanol-terminierten Silikon der Formel

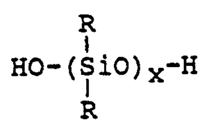

und einem monofunktionellen Kettenabbruchmittel.

23. Polymer, wie in Anspruch 22 beansprucht, worin das Kettenabbruchmittel eine Verbindung der Formel

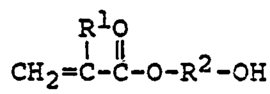

ist.

24. Vernetztes Polyorganosiloxanpolymer, welches das Produkt der radikalischen Härtung eines Polymeren, wie in einem der Ansprüche 1 bis 23 beansprucht, umfaßt.

**Revendications**

1. Un polymère polyorganosiloxane ayant une viscosité permettant l'écoulement d'environ 500 Pa.s à 25°C ou moins et ayant une structure représenté par l'une des formules:

$$(AB)_mC \text{ ou } [(AB)_m]_nSiR_{(4-n)}$$

où A est un segment organosiloxane linéaire, ramifié ou cyclique contenant 3 à 50 motifs siloxanes répétés, chaque segment A incluant an moins trois motifs siloxanes portant des groupes acryliques; B est un

segment organosiloxane représenté par la formule

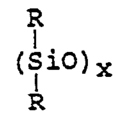

C est A ou un groupe triorganosilyle; les groupes R sont des groupes organiques identiques ou différents autres que des groupes acryliques ou que des groupes co-durcissables avec ceux-ci; m est un nombre entier égal ou supérieur à 1; n est 3 ou 4; et x est un nombre entier valant au moins 100; chaque segment A incluant également un motif de jonction qui lie le segment A au segment B, soit par un enchaînement Si-O-si, soit par un enchaînement Si-$R^3$-Si où $R^3$ est un groupe alkylène ou alcénylène.

2. Un polymère tel que revendiqué dans la revendication 1, dans lequel le segment A inclut au moins 3 motifs siloxanes contenant des groupes acrylique, de la structure

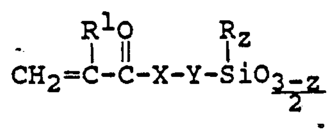

ou $R^1$ est H ou un groupe alkyle inférieur; X est O, NH ou S; Y est un groupe de jonction divalent; et z est 0, 1 ou 2.

3. Un polymère tel que revendiqué dans la revendication 1 ou 2, dans lequel le segment A comprend 3 à 30 motifs siloxanes répétés.

4. Un polymère tel que revendiqué dans la revendication 3, dans lequel le segment A comprend 3 à 20 motifs siloxanes répétés.

5. Un polymère tel que revendiqué dans l'une quelconque des revendications 1 à 4, dans lequel le segment A est linéaire ou ramifié et 40 à 70% des motifs siloxanes du segment A sont représentés par la formule

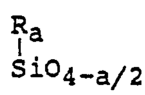

où a est 0 à 3, et 30 à 60% des motifs siloxanes du segment A sont représentés par la formule

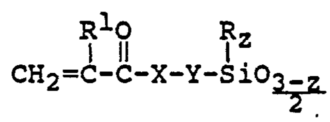

où $R^1$ est H ou un groupe alkyle inférieur; X est O, NH ou S; Y est un groupe de jonction divalent; et z est 0, 1 ou 2.

6. Un polymère tel que revendiqué dans l'une quelconque des revendications 1 à 5, dans lequel x vaut au moins 160.

7. Un polymère tel que revendiqué dans l'une quelconque des revendications 1 à 5, dans lequel x vaut au moins 300.

8. Un polymère tel que revendiqué dans l'une quelconque des revendications 1 à 7, dans lequel les groupes R sont des groupes alkyles ou aryles substitués ou non substitués.

9. Un polymère tel que revendiqué dans la revendication 8, dans lequel les groupes R sont choisis parmi les groupes phényle, méthyle et trifluoropropyle.

10. Un polymère tel que revendiqué dans l'une quelconque des revendications 1 à 9, dans lequel m est 1 à 4.

11. Un polymère tel que revendiqué dans l'une quelconque des revendications 1 à 10, dans lequel les motifs siloxanes contenant des groupes acryliques ont la structure:

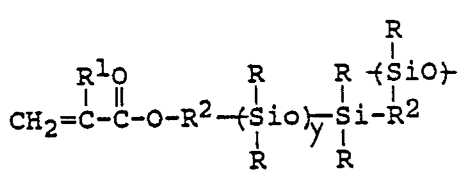

où $R^1$ est un groupe alkyle inférieur, les groupes $R^2$ sont des groupes alkylènes ou alcénylènes identiques ou différents, et y est 0 à 4.

12. Un polymère polyorganosiloxane tel que revendiqué dans la revendication 11, préparé par un procédé comprenant l'hydrosilylation d'une silicone à grappes de la formule:

$$(DB)_mC^1 \text{ or } [(DB)_m]_nSiR_{(4-n)}$$

où $C^1$ est D ou un groupe triorganosilyle et D est un segment polyorganosiloxane qui inclut au moins 3 motifs siloxanes répétés comportant des groupes alcényles ou alcynyles latéraux, par un composé de la formule:

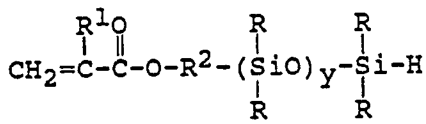

13. Un polymère tel que revendiqué dans la revendication 12, dans lequel y est 0 ou 1, R est le groupe méthyle et $R^2$ est le groupe propyle.

14. Un polymère tel que revendiqué dans la revendication 12 ou 13, dans lequel le segment D contient au moins trois motifs répétés comportant des groupes vinyle ou allyle latéraux.

15. Un polymère tel que revendiqué dans l'une quelconque des revendications 1 à 10, dans lequel les motifs siloxanes contenant des groupes acryliques ont la structure:

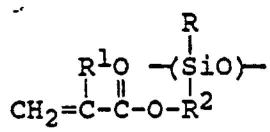

où $R^1$ est H ou un groupe alkyle inférieur et $R^2$ est un groupe alkylène ou alcénylène.

16. Un polymère tel que revendiqué dans la revendication 15, dans lequel A comprend au moins 4 motifs siloxanes répétés dont au moins trois sont des motifs répétés contenant des groupes acryliques et dont au moins un est représenté par la formule:

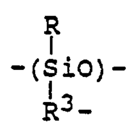

où $R^3$ est un groupe alkylène ou alcénylène et est lié à un atome de silicium du segment B.

17. Un polymère tel que revendiqué dans la revendication 16, dans lequel $R^3$ est un groupe éthylène ou propylène.

18. Un polymère tel que revendiqué dans l'une quelconque des revendications 15 à 17, dans lequel le segment A est un segment organosiloxane cyclique.

19. Un polymère tel que revendiqué dans la revendication 15, dans lequel le segment A est lié au segment B par un enchaînemen t Si-O-Si.

20. Un polymère tel que revendiqué dans la revendication 19, le polymère étant préparé par condensation d'un prépolymère du segment A possédant au moins 3 motifs siloxanes répétés contenant des groupes acryliques et au moins un motif de la formule:

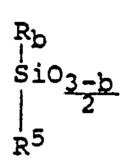

où $R^5$ est un groupe condensable et b est 1 ou 2, avec une silicone terminée par des groupes silanols de la formule:

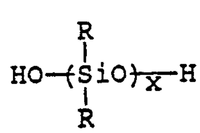

21. Un polymère tel que revendiqué dans la revendication 20, dans lequel $R^5$ est

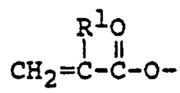

22. Un polymère tel que revendiqué dans la revendication 19, préparé par condensation d'un prépolymère du segment A possédant au moins 3 motifs siloxanes répétés contenant des groupes acryliques et au moins un motif de la formule:

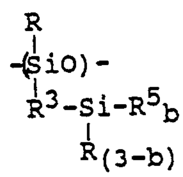

où $R^5$ est un groupe condensable et b est 1 ou 2, avec une silicone terminée par des groupes silanols de la formule:

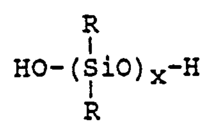

et un agent de blocage de chaîno monofonctionnel.

23. Un polymère tel que revendiqué dans la revendication 22, dans lequel l'agent de blocage de chaîne est un composé de la formule:

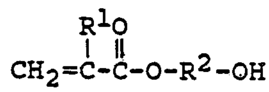

24. Un polymère polyorganosiloxane réticulé comprenant le produit de durcissement par des radicaux libres d'un polymère tel que revendiqué dans l'une quelconque des revendications 1 à 23.